# EUROPEAN PATENT APPLICATION

(11) **EP 3 001 704 A1**
(43) Date of publication of application: **30.03.2016**
(21) Application number: 14306515.9
(22) Date of filing: 29.09.2014
(51) Int. Cl.: H04W 4/00, H04W 4/08

(54) **Method, network node, distributed system and communication network for providing data from machine devices to a first network node**

(71) Applicant: ALCATEL LUCENT, 92100 Boulogne-Billancourt (FR)
(72) Inventor: Saur, Stephan, 70435 Stuttgart (DE); Fonseca dos Santos, Andre, 2518 DH Den Haag (NL)
(74) Representative: 2SPL Patentanwälte PartG mbB

(57) **Abstract**

The embodiments of the invention relate to a method (MET) for providing data from machine devices to a first network node. The method (MET) contains configuring (S1) a network node of a communication network or a distributed system of the communication network to operate as a virtual machine device for at least one group of machine devices. The method further contains receiving (S9) a request message for the data. The request message contains at least one virtual identifier and the at least one virtual identifier is mapped to the data. The method even further contains identifying (S10) the at least one group of machine devices or an intersection of the at least one group of machine devices and of at least one further group of machine devices based on the at least one virtual identifier and transmitting (S15) a response message which contains the data which are provided from the at least one group of machine devices or from the intersection. The embodiments even further relate to a network node for providing data from machine devices to a first network node, to a distributed system for providing data from machine devices to a first network node and to a communication network.

## Description

### FIELD OF THE INVENTION

The present invention relates to machine-to-machine communication and, more particularly but not exclusively, to addressing machine devices in a communication network and obtaining data from the machine devices.

### BACKGROUND

This section introduces aspects that may be helpful in facilitating a better understanding of the invention. Accordingly, the statements of this section are to be read in this light and are not to be understood as admission about what is in the prior art.

Mobile network operators see M2M communication (M2M = machine-to-machine) as an increasing revenue stream. They wish to integrate M2M services in existing and future cellular mobile radio systems. However, these cellular mobile radio systems have been designed for a moderate number of UEs (UE = user equipment) and broadband applications, but clearly not for M2M communication that is predominantly characterized by a very big number of machine devices (one or two orders of magnitude more than number of UEs) and very short messages.

Many M2M deployments are characterized by redundancy in the system. This means there are many machine devices of the same type that have a same task. If these machine devices are installed in close proximity, the messages that they produce will be either identical or highly correlated. An example is weather monitoring. The main reason to deploy more sensors than are actually needed is to reduce failure probability and to achieve higher system stability. Some of the machine devices may be out of order, further machine devices may have empty batteries, a radio cell serving a group of machine devices may be overloaded, or some signals being transmitted from the machine devices cannot be received for any other reason. As the machine devices are relatively cheap compared to a classical UE, the investment for an M2M service provider to add this redundancy is not too big.

One basic paradigm in cellular radio mobile systems is that a user is addressing a specific other user by using a certain phone number or is addressing information at an Internet server by using a certain http address (http = Hypertext Transfer Protocol). A main task of communication networks is to establish a connection between both users or between the user and the Internet server. In contrast, in many M2M use cases a user is interested in content of machine devices such as environment measurement values of sensors but not in information how to contact the machine devices.

### SUMMARY

An object of the embodiments of the invention is to provide methods and apparatuses for facilitating data retrieval from machine devices such as sensors.

The object is achieved by a method for providing data from machine devices to a first network node. The method contains configuring a network node of a communication network or a distributed system of the communication network to operate as a virtual machine device for at least one group of machine devices. The method further contains receiving a request message for the data. The request message contains at least one virtual identifier which is mapped to the data. The method even further contains identifying the at least one group of machine devices or an intersection of the at least one group of machine devices and of at least one further group of machine devices based on the at least one virtual identifier and transmitting a response message which contains the data which are provided from the at least one group of machine devices or from the intersection.

The object is further achieved by a network node for providing data from machine devices to a first network node. The network node contains a receiver module which is configured to receive a request message for the data. The request message contains at least one virtual identifier which is mapped to the data. The network node further contains a processing module which is configured to operate the network node as a virtual machine device for at least one group of machine devices and which is further configured to identify the at least one group of machine devices or an intersection of the at least one group of machine devices and of at least one further group of machine devices based on the at least one virtual identifier. The network node even further contains a transmitter module which is configured to transmit a response message which contains the data which are provided from the at least one group of machine devices or from the intersection.

The network node may be for example a so-called M2M content managing server or a so-called MTCS (MTCS = machine type communication server) or an application server for storing information being received from machine devices or an application server for mapping data requests to machine devices. In case of a mobile radio communication network according to 3GPP LTE (3GPP = Third Generation Partnership Project, LTE = Long Term Evolution), the network node may be for example the so-called PDN-GW (PDN-GW = Packet Data Network Gateway).

The object is even further achieved by a distributed system which contains at least two network nodes for providing data from machine devices to a first network node. The distributed system contains a receiver functionality which is configured to receive a request message for the data. The request message contains at least one virtual identifier which is mapped to the data. The distributed system further contains a processing functionality which is configured to operate the distributed system as a virtual machine device for at least one group of machine devices and which is further configured to identify the at least one group of machine devices or an intersection of the at least one group of machine devices and of at least one further group of machine devices based on the at least one virtual identifier. The distributed system even further contains a transmitter functionality which is configured to transmit a response message which contains the data which are provided from the at least one group of machine devices or from the intersection. At least one of the receiver functionality, the processing functionality and the transmitter functionality is distributed across the at least two network nodes.

The object is even further achieved by a communication network for providing data from machine devices to a first network node. The communication network contains at least one group of machine devices and either the network node or the distributed system as described above. The communication network may be for example a mobile radio communication network.

The embodiments provide an advantage that a user of M2M services does not need to know the addresses for communicating with one machine device or with several of the machine devices. The user of M2M services only selects the information which he or she wants to know. This information is mapped by the first network node to one or several virtual identifiers, which is/are transmitted to an intermediate network node (the second network node) or to an intermediate distributed network which is located in between a user device and the machine devices. The intermediate network node or the intermediate distributed network is able to contact the individual machine devices by knowing their specific addresses such as IPv4 addresses or IPv6 addresses. The embodiments provide a further advantage that the user of the M2M services does not need to select any machine devices. This functionality is also handled by the intermediate network node or by the intermediate distributed network node. Thereby, only machine devices will be selected which are able to provide the requested information with a predefined reliability and/or a predefined accuracy.

According to a preferred embodiment, the method further contains receiving raw data from the at least one group of machine devices or from the intersection and pre-processing the raw data before the data are transmitted by the response message.

In further embodiments, the pre-processing may be at least one of the following processing steps: a statistical evaluation of the raw data such as averaging the raw data over a predefined time range, averaging the raw data over at least two machine devices, determining a minimum value or a maximum value of the raw data, calculating the standard deviation, determining the distribution function, a context-based evaluation of the raw data such as checking whether the raw data exceed a threshold or whether the raw data contain erroneous data for filtering out the erroneous data or a transformation of the raw data such as a transformation of the raw data from the time domain into the frequency domain or.

This embodiment provides the advantage that the network node or the distributed system may transmit only pre-processed data which may require less transmission resources and the network node which receives the response message may need fewer processing resources for processing and refining received raw data.

According to a further preferred embodiment, the method may further contain the step of mapping at least one machine device to the at least one group of machine devices when at least one operating condition is fulfilled or de-mapping at least one machine device from the at least one group of machine devices when the at least one operating condition is not fulfilled. Preferably, the at least one operating condition may be one of the following operating conditions: a current battery capacity of the at least one machine device is above a predefined battery capacity, a current traffic load of a radio cell providing a wireless connection to the at least one machine device is below a predefined traffic load, an operation mode of the at least one machine device is equal to a full-operational mode. This further preferred embodiment provides the benefit of reducing traffic load because only data from those machine devices are requested which have enough battery power to handle a data request or which are placed in a radio cell with low traffic load or which are not in a failure mode or which are in a full-operational mode and not for example in a test mode during installation.

In a first alternative embodiment, the method further contains transmitting at least one data request for the data to the at least one group of machine devices or to the intersection, and a provisioning of the data from the at least one group of machine devices or from machine devices of the intersection is triggered by the at least one data request. With respect to the first alternative embodiment messages only need to be transmitted when data from the machine devices are requested.

In a second alternative embodiment, a provisioning of the data from the at least one group of machine devices or from machine devices of the intersection is based on periodically receiving from the at least one group of machine devices of from the machine devices of the intersection data reports which contain the data. For the second alternative embodiment the method further contains storing the data at the network node or at the distributed system. The second alternative embodiment provides the advantage of being able to transmit the response message in a faster way because the data are already stored at the network node or at the distributed system.

In a further preferred embodiment, the method further contains selecting from the at least one group of machine devices or from the machine devices of the intersection a predefined number of machine devices for providing the data, when a number of machine devices of the at least one group of machine devices or of the intersection exceeds a predefined threshold. The predefined number of machine devices may be set for example to a number which is sufficient for getting a reliable statistical statement for all machine devices of the at least one group of machine devices or of the intersection. Thereby, traffic load between the machine devices and the second network node and between the second network node and the first network node and processing load at the second network node and/or the first network node can be reduced.

According to various embodiments, the data may be either of the following:
- at least one value of a physical parameter of an environment of the at least one group of machine devices,
- at least one parameter of a status of infrastructure being monitored by at least one of the machine devices.

The physical parameter may be for example temperature, humidity, atmospheric pressure, seismic/volcanic activities, quality value for soil or air etc. The status of the infrastructure may be for example stability of bridges or of tunnels, leakage of a tank, of an oil pipeline or of a gas pipeline, fill level of the tank, pressure level of the gas pipeline, flow rate of the oil pipeline, a short circuit at a high voltage installation or a voltage level at the high voltage installation.

With respect to further various embodiments, the at least one virtual identifier may be either of the following:
- an identifier for a location such as a city or a region of a country of the at least one group of machine devices,
- an identifier for a functionality such as temperature sensor or humidity sensor of the at least one group of machine devices,
- an identifier for an ownership such as a service provider or a content provider of the at least one group of machine devices,
- an identifier for a manufacturing date or for a firmware version,
- an identifier indicating a format of the data being reported such as a threshold related to measurements of the machine devices, a required accuracy of measurements, a required up-to-dateness of measurements, or a required type of pre-processing to be applied by the second network node on received raw data.

Further advantageous features of the embodiments of the invention are defined in the dependent claims and are described in the following detailed description.

### BRIEF DESCRIPTION OF THE FIGURES

The embodiments of the invention will become apparent in the following detailed description and will be illustrated by accompanying figures given by way of non-limiting illustrations.
Figure 1 shows schematically a communication network for providing data from machine devices to a first network node according to an exemplarily embodiment of the invention.
Figure 2 shows schematically a flow diagram of an overall method for providing the data from the machine devices to the first network node according to a first alternative embodiment of the invention.
Figure 3 shows schematically a flow diagram of a further overall method for providing the data from the machine devices to the first network node according to a second alternative embodiment of the invention.
Figure 4 shows schematically a flow diagram of a method for providing the data from the machine devices to the first network node according to an exemplarily embodiment of the invention.
Figure 5 shows schematically a block diagram of a network node for providing the data from the machine devices to the first network node according to an exemplarily embodiment of the invention.
Figure 6 shows schematically a block diagram of a distributed system for providing the data from the machine devices to the first network node according to an exemplarily embodiment of the invention.

### DESCRIPTION OF THE EMBODIMENTS

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

A splitting of processing functions across processing units shown in the Figures is not critical, and as can be understood by those skilled in the art that the number of processing units, the number of processing functions and an allocation of the processing functions to the processing units may vary without departing from the scope of the embodiments of the invention as defined in the appended claims. The number of the steps for performing the method(s) is not critical, and as can be understood by those skilled in the art that the number of the steps and the sequence of the steps may vary without departing from the scope of the embodiments of the invention as defined in the appended claims.

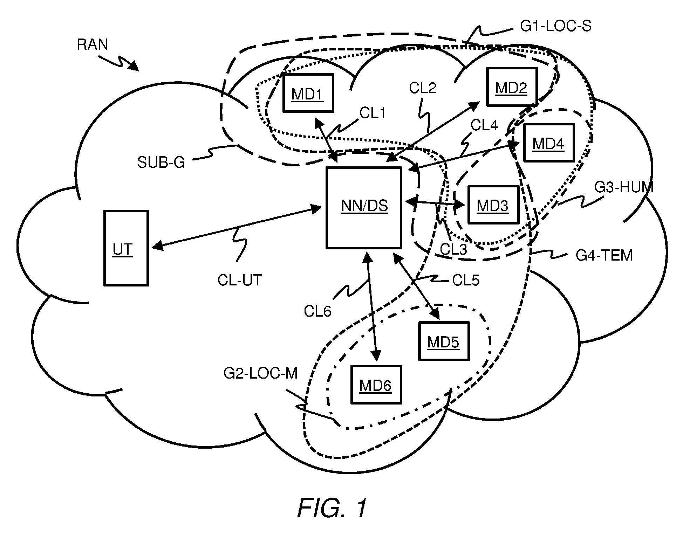

Figure 1 shows schematically a communication network RAN which is configured to transfer data from machine devices MD1, ..., MD6 which are part of the communication network RAN. The data may be for example at least one value of a physical parameter of an environment of a machine device or at least one parameter of a status of infrastructure which is monitored by one machine device or several machine devices.

In one embodiment, the communication network RAN may be for example a single mobile radio communication network or an interconnected group of several mobile radio communication network having a same radio access technology or having different radio access technologies such as GSM/GPRS (GSM = Global System for Mobile Communication, GPRS = General Packet Radio Service), UMTS (UMTS = Universal Mobile Telecommunication Systems), HSPA (HSPA = High Speed Packet Access), LTE (LTE = Long Term Evolution), LTE-Advanced, WLAN (WLAN = Wireless Local Area Network; based on one of the IEEE 802.11 standards), WiMAX network (WiMAX = Worldwide Interoperability for Microwave Access; based on one of the IEEE 802.16 standards for enabling a delivery of last mile wireless broadband access as an alternative to cable and DSL (DSL = Digital Subscriber Line)) or alternatively cdmaOne, CDMA2000, or CDMA2000 EV-DO which are standardized by 3GPP2 (3GPP2 = 3rd Generation Partnership Project 2).

According to further alternative embodiments, the communication network RAN may be an interconnected group of at least one fixed communication network and at least one mobile radio communication network or the communication network RAN may be a single fixed communication network or an interconnected group of several fixed communication networks.

The communication network RAN contains a first network node UT which may be for example a user terminal such as a mobile station. The term "mobile station" may be considered synonymous to, and may hereafter be occasionally referred to, as a mobile unit, a mobile user, an access terminal, a UE (UE = user equipment), a subscriber, a user, a cellular telephone, a smart phone, a portable computer, a pocket computer, a hand-held computer, a PDA (PDA = Personal Digital Assistant), a USB stick (USB = Universal Serial Bus), a smart watch, a head mounted display such as a Google glass or a car-mounted mobile device.

The communication network RAN further contains a second network node NN or a distributed system DS of at least two network nodes. The second network node NN or the distributed system DS may be for example a so-called M2M communication manager or a so-called MTCS (MTCS = machine type communication server) for processing and storing data being received from machine devices and for mapping data requests from the first network node UT to one machine device or to several of the machine devices MD1, ..., MD6. The second network node NN may be for example a network node of a core network of a mobile radio communication network such as the so-called PDN-GW which is applied in 3GPP mobile radio communication networks.

The second network node NN or the distributed system DS is connected to the first network node UT by a communication link CL-UT which may be for example at least partly a radio communication link. Alternatively, the communication link CL-UT may be a fixed communication link based for example on a coaxial cable or an optical fiber.

The communication network RAN even further contains exemplarily machine devices MD1, MD2, MD3, MD4, MD5, MD6 which are connected by communication links CL1, CL2, CL3, CL4, CL5, CL6 to the second network node NN or to the distributed system DS. The machine devices MD1, MD2, MD3, MD4, MD5, MD6 may be for example sensors such as temperature sensors, humidity sensors, air pressure sensors etc. Alternatively, the machine devices MD1, MD2, MD3, MD4, MD5, MD6 may be for example measurement equipment as part of a robot, of a machine or of a vehicle which is equipped with a communication module.

When the machine devices MD1, MD2, MD3, MD4, MD5, MD6 may be sensors as mentioned above the machine devices MD1, MD2, MD3, MD4, MD5, MD6 may have locations and may have functionalities as shown in following mapping table 1:

**Table 1**

| **Machine device** | **Location Stuttgart** | **Location Munich** | **Functionality Humidity** | **Functionality Temperature** |
|---|---|---|---|---|
| MD1 | X | | | X |
| MD2 | X | | | X |
| MD3 | X | | X | X |
| MD4 | X | | X | |
| MD5 | | X | | X |
| MD6 | | X | | X |

The machine devices MD1, MD2, MD3, MD4 may be located in Stuttgart and therefore may be allocated to a first group G1-LOC-S. The machine devices MD5, MD6 may be located in Munich and therefore may be allocated to a second group G2-LOC-M. The machine devices MD3, MD4 may be sensors which are capable to measure the humidity at a location of the machine devices MD3, MD4 and there may be allocated to a third group G3-HUM. The machine devices MD1, MD2, MD3, MD5, MD6 may be sensors which are capable to measure the temperature at a location of the machine devices MD1, MD2, MD3, MD5, MD6 and there may be allocated to a fourth group G4-TEM. This means that the machine device MD3 is allocated to the third group G3-HUM and to the fourth group G4-TEM because the machine device is configured to measure a current temperature value and a current humidity value. The groups G1-LOC-S, G2-LOC-M, G3-HUM, G3-TEM may have allocated further machine devices which are not shown in Figure 1 for simplification.

With respect to an exemplarily embodiment, the locations "Stuttgart" and "Munich" and the functionalities "Humidity" and "Temperature" are used as virtual identifiers for identifying the machine devices MD1, MD2, MD3, MD4, MD5, MD6 at the second network node NN or at the distributed system DS.

With respect to further alternative embodiments, the virtual identifier may be an identifier for an ownership of the machine device or of the group of machine devices or the virtual identifier may be an identifier for a manufacturing date or for a firmware version, or the virtual identifier may be an identifier indicating a format of the data being reported such as a threshold related to measurements of the machine devices, a required accuracy of measurements, a required up-to-dateness of measurements, or a required type of pre-processing to be applied by the second network node on received raw data.

When a user of the first network node UT wants to obtain for example the current temperature in Stuttgart, the first network node UT does not need to know network addresses of corresponding machine devices which are capable to measure the temperature in Stuttgart. The first network node UT also does not need to know operation conditions of the machine devices such as a battery status of a machine device, an operational mode of a machine device or network load of an area in which a machine device is located.

Instead, a request message is transmitted from the first network node UT to the second network node NN or to the distributed system DS which contains a first virtual identifier "Temperature" and a second virtual identifier "Stuttgart". Preferably, the request message may contain the first virtual identifier "Temperature" and the second virtual identifier "Stuttgart" as payload. Thereby, for example conventional transport layer protocols such as TCP (TCP = Transmission Control Protocol) or UDP (UDP = User Datagram Protocol) may be applied for transmitting the first virtual identifier "Temperature" and the second virtual identifier "Stuttgart". In one embodiment, the request method may be send by a client application running at the first network node to a server application running at the second network node NN or the distributed system DS. The client application may be for example a so-called app which is installed on a smartphone or it may be a computer program which is stored on a personal computer. This embodiment allows to use common client server communication for transmitting the first virtual identifier "Temperature" and the second virtual identifier "Stuttgart" to the second network node NN or to the distributed system DS.

The second network node NN or the distributed system DS are configured in such a way, that the second network node NN or the distributed system DS operates as a so-called virtual machine device for the machine devices MD1, MD2, MD3, MD4, MD5, MD6. This means, that the second network node NN or the distributed system DS work as a single virtual machine device for all machine devices MD1, MD2, MD3, MD4, MD5, MD6 which are connected to the second network node NN or to the distributed system DS. In such a case, the first network UT only needs to know a network address for the second network node NN or for the distributed system DS but not for the machine devices MD1, MD2, MD3, MD4, MD5, MD6.

The second network node NN or the distributed system DS may use for example the mapping table 1 to identify corresponding machine devices for the first virtual identifier "Temperature" and the second virtual identifier "Stuttgart". This means that the second network node NN or the distributed system DS identifies in a first step the fourth group G4-TEM of machine devices MD1, MD2, MD3, MD5, MD6 for the first virtual identifier "Temperature" and identifies the first group G1-LOC-S of machine devices MD1, MD2, MD3, MD4 for the second virtual identifier "Stuttgart". In a second step, the second network node NN or the distributed system DS identifies machine devices MD1, MD2, MD3 based on an intersection of the first group G1-LOC-S and the fourth group G4-TEM. The intersection provides a sub-group SUB-G of machine devices.

The second network node NN or the distributed system DS have knowledge of network addresses of the machine devices MD1, MD2, MD3, MD4, MD5, MD6 and therefore the second network node NN or the distributed system DS is configured to get in contact with the machine devices MD1, MD2, MD3 to obtain for example current temperature values in Stuttgart. When the second network node NN or the distributed system DS has obtained the current temperature values in Stuttgart from the sub-group SUB-G, the second network node NN or the distributed system DS may transmit these current temperature values to the first network node UT or may transmit for example a temperature value which is averaged over a predefined time such as 30 minutes to the first network node UT.

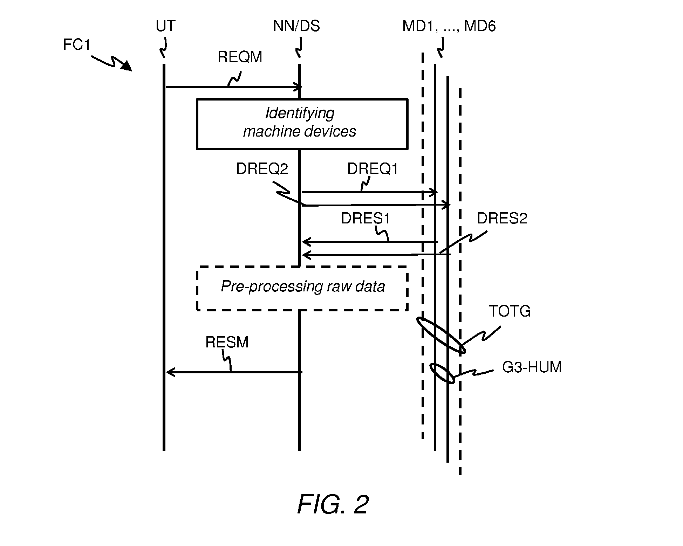

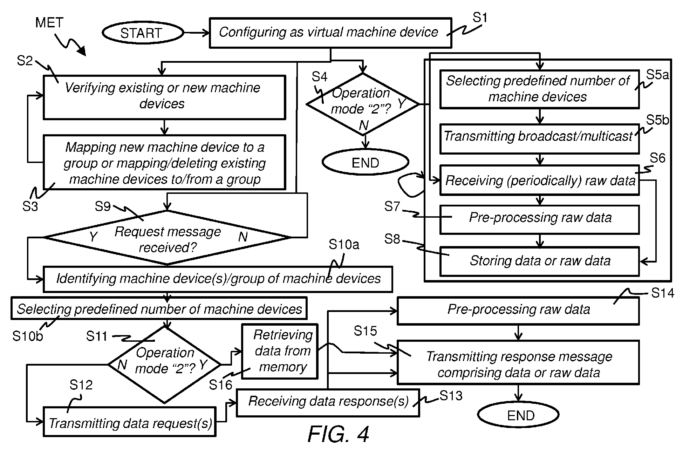

Figure 2 shows schematically a flow diagram FC1 of an overall method for providing data from the machine devices MD1, ..., MD6 of the communication network RAN to the first network node UT. The machine devices MD1, ..., MD6 may be a total group of machine devices TOTG which are allocated to the second network node NN or to the distributed system DS. More details with respect to method steps which are executed by the second network node NN or by the distributed system DS are given with respect to Figure 4 and corresponding description.

The request message REQM which contains one or several virtual identifiers is transmitted from the first network node UT to the second network node NN or to the distributed system DS. Then the second network node NN or the distributed system DS may identify based on a virtual identifier a group of machine devices such as for example the third group G3-HUM of machine devices MD3, MD4. Alternatively, the second network node NN or the distributed system DS may identify a single machine device or several machine devices from an intersection of two or more than two groups of machine devices based on two or more than two virtual identifiers. Following this identification, the second network node NN or the distributed system DS transmits a single data request message DREQ1 or DREQ2 to the single machine device or transmits several data request messages DREQ1, DREQ2 to the group of machine devices or to the several machine devices resulting from the intersection of two or more than two groups of machine devices or to a predefined number of machine devices which is selected from the group of machine devices or from the intersection for reducing traffic load and processing load. Each one of the single data request message DREQ1 or DREQ2 or the several data request messages DREQ1, DREQ2 may contain for example a flag such as bit "1" which means that for example a current humidity value is requested.

Then, the single machine device transmits a single data response message DRES1 or DRES2 to the second network node NN or the distributed system DS or the several machine devices transmit several data response messages DRES1, DRES2 to the second network node NN or the distributed system DS. Each one of the single data response DRES1 or DRES2 or the several data response messages DRES1, DRES2 may contain raw data such as a humidity value which has been measured currently by a corresponding machine device.

By an optional processing step the second network node NN or the distributed system DS may pre-process the raw data. The pre-processing may be for example averaging the raw data over a predefined time range such a 5 minutes or 1 hour, averaging the raw data over at least two machine devices, determining a minimum value or a maximum value of the raw data, or any further statistical evaluation of the raw data, such as calculating the standard deviation, determining the distribution function, detecting correlations in the raw data or any further mathematical operation on the raw data, such as transformation from the time domain into the frequency domain or a context-based evaluation of the raw data such as checking whether the raw data exceed a threshold or whether the raw data contain erroneous data for filtering out the erroneous data.

Finally, either the raw data or the pre-processed data are transmitted by a response message RESM from the second network node NN or the distributed system DS to the first network node UT which may for example display the raw data or the pre-processed data on a graphical user interface to a user of the first network node UT.

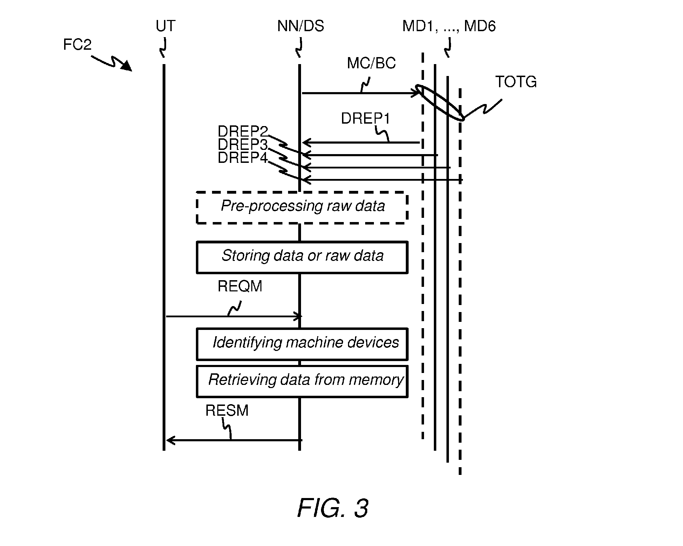

Figure 3 shows schematically a further flow diagram FC2 of a further overall method for providing data from the machine devices MD1, ..., MD6 of the communication network RAN to the first network node UT. More details with respect to method steps which are executed by the second network node NN or by the distributed system DS are given with respect to Figure 4 and corresponding description.

Collection of data at the second network node NN or at the distributed system DS before the request message REQM is received at the second network node NN or at the distributed system DS is a main difference between the flow diagram FC1 and the further flow diagram FC2.

In a first alternative embodiment, the second network node NN or the distributed system DS transmits a multicast message MC to a group of machine devices such as the fourth group G4-TEM for requesting data from corresponding machine devices. Then, each one of the machine devices which has received the multicast message MC transmits to the second network node NN or to the distributed system DS a data report DREP1, DREP2, DREP3, DREP4 which contains the requested data.

In a second alternative embodiment, the second network node NN or the distributed system DS transmits a broadcast message BC to all machine devices which are allocated to the second network node NN or to the distributed system DS for requesting data from all these machine devices. Then, each one of the machine devices which has received the broadcast message BC transmits to the second network node NN or to the distributed system DS a data report DREP1, DREP2, DREP3, DREP4 which contains the requested data.

A transmission of the multicast message MC or of the broadcast message BC may be repeated by the second network node NN or by the distributed system DS with a predefined time period such as 5 minutes or 30 minutes. In an alternative embodiment, the multicast message MC or the broadcast message BC may be transmitted only once but may contain information by which time period the machine devices MD1, ..., MD6 shall transmit the data reports DREP1, DREP2, DREP3, DREP4.

In a third alternative embodiment, one machine device or several of the machine devices MD1, ..., MD6 may be configured to transmit automatically and periodically with the predefined time period raw data such as a current temperature value and/or a current humidity value to the second network node NN or to the distributed system DS.

By an optional processing step the second network node NN or the distributed system DS may pre-process the raw data. The pre-processing may be for example averaging the raw data over a predefined time range such a 5 minutes or 1 hour, averaging the raw data over at least two machine devices, determining a minimum value or a maximum value of the raw data, or any further statistical evaluation of the raw data, such as calculating the standard deviation, determining the distribution function, detecting correlations in the raw data or any further mathematical operation on the raw data, such as transformation from the time domain into the frequency domain or a context-based evaluation of the raw data such as checking whether the raw data exceed a threshold or whether the raw data contain erroneous data for being able to filter out the erroneous data.

Then, either the raw data or the pre-processed raw data may be stored in a memory unit together with a label or identification to which machine device or to which group of machine devices the stored data are belonging, or which type of pre-processing has been carried out.

Later, the request message REQM which contains one or several virtual identifiers is transmitted from the first network node UT to the second network node NN or to the distributed system DS. Then the second network node NN or the distributed system DS may identify based on a virtual identifier a group of machine devices such as for example the third group G3-HUM of machine devices MD3, MD4. Alternatively, the second network node NN or the distributed system DS may identify a single machine device or several machine devices from an intersection of two or more than two groups of machine devices based on two or more than two virtual identifiers.

Then, the stored raw data or the pre-processed raw data are retrieved from the memory unit for the identified single machine device or for the group of machine devices or for the several machine devices identified from the intersection of two or more than two groups of machine devices.

Finally, either the raw data or the pre-processed raw data are transmitted by a response message RESM from the second network node NN or the distributed system DS to the first network node UT which may for example display the raw data or the pre-processed data on a graphical user interface to a user of the first network node UT.

Figure 4 shows schematically a flow diagram of a method MET for providing data from the machine devices MD1, ..., MD6 in the communication network RAN according to an exemplarily embodiment. The method MET may be executed by the second network node NN or by the distributed system DS.

In a first step S1, the second network node NN or the distributed system DS is configured to operate as the virtual machine device for the machine devices MD1, ..., MD6. This configuration may be done for example during installation of the second network node NN or the distributed system DS.

Further steps S2, S3 may be repeated with a predefined time period such as for example 1 hour or 1 day. By the step S2 it may be verified, whether a new machine device has been installed and allocated to the second network node NN or to the distributed system DS. In such a case, the new machine device may be mapped and allocated by the step S3 to an existing group of machine devices or may be mapped and allocated to a new group of machine devices, when for example the new machine device is a new type of sensor not used before. Thereby, the mapping table 1 may be amended.

By the step S2 it may be further verified, whether an already installed and allocated machine device may have been uninstalled. In such a case, the already installed and allocated machine device may be de-allocated during the step S3 from a corresponding group of machine devices and the mapping table 1 may be amended accordingly.

By the step S2 it may be even further verified, whether one machine device or several of the already installed and allocated machine devices fulfill or not fulfill one or several operation conditions. The operation conditions may be for example: a current battery capacity of a machine device is above a predefined battery capacity, a current traffic load of a radio cell providing a wireless connection to a machine device is below a predefined traffic load, an operation mode of a machine device is equal to a so-called full operational mode. Full operational mode means that the machine device is capable to provide full service and is not for example in a failure mode, an idle mode, a busy mode or in a test mode. The test mode may be applied for example during an installation phase of the machine device. When a machine device for example does not fulfill an operation condition not any longer, the machine device is de-mapped from one or several groups of machine devices during the step S3. Else, when a machine has not fulfilled one operation condition or several operation conditions in the past but now fulfills the operation condition or the several operation conditions, the machine device is mapped to one or group of machine devices or to several groups of machine devices. Thereby, the mapping table 1 may be amended.

Alternatively, an execution of the steps S2, S3 may be triggered for example by a failure report which has been received from a machine device or by an initialization message which may be transmitted from a new installed machine device to the second network node NN or to the distributed system DS. The initialization message may contain for example information about location, functionality, or ownership of the new installed machine device.

In a further step S4, it may be verified which operation mode may be applied by the second network node NN or by the distributed system DS. Operation mode "1" may apply a processing of the second network node NN or the distributed system DS as shown in Figure 2 and operation mode "2" may apply a processing of the second network node NN or the distributed system DS as shown in Figure 3. Using operation mode "1", a data transfer from the machine devices MD1, ..., MD6 to the second network node NN or to the distributed system DS is triggered by receiving the request message REQM at the second network node NN or at the distributed system DS. Using operation mode "2", a data transfer from the machine devices MD1, ..., MD6 to the second network node NN or to the distributed system DS is executed before the request message REQM is received at the second network node NN or at the distributed system DS.

When the second network node NN or the distributed system DS applies the operation mode "2", step S5a may be a next step. When else the second network node NN or the distributed system DS does not apply the operation mode "2", no further steps of this part of the method are executed.

In a next optional step S5a, a predefined number of machine devices may be selected from the at least one group (G1-LOC-S, G2-LOC-M, G3-HUM, G3-TEM) of machine devices (MD1, ..., MD6) or from the sub-group for providing the data, when a number of machine devices of the at least one group (G1-LOC-S, G2-LOC-M, G3-HUM, G3-TEM) of machine devices (MD1, ..., MD6) or of the sub-group exceeds a predefined threshold. This allows reducing traffic load between the second network node NN and the machine devices MD1, ..., MD6.

By the step S5b, the second network node NN or the distributed system DS transmits the multicast message MC or the broadcast message BC as described with respect to the Figure 3.

In a further step S6, the raw data are received from the machine devices MD1, ..., MD6 preferably in a periodic way with the predefined time period.

A next step after the step S6, may be step S7 when pre-processing of the received raw data as described above with respect to Figure 3 is activated at the second network node NN or at the distributed system DS.

A further next step after the step S6, may be step S8 when pre-processing is not activated at the second network node NN or at the distributed system DS. The step S8 also follows the step S7. By the step S8 either the raw data as received from the machine devices MD1, ..., MD6 or data which is obtained by pre-processing the raw data is stored in the memory unit.

The steps S5a, S5b, S6, S7, S8 may be continuously repeated which is indicated by a bended arrow at left side of a box which embraces the steps S5a, S5b, S6, S7, S8.

A further step after the step S1 may be step S9. Thereby, it is verified whether the request message REQM is received at the second network node NN or at the distributed system DS. When no request message REQM has been received, step S9 is repeated. When else the request message REQM has been received at the second network node NN or at the distributed system DS, step S10a may be executed next.

By the step S10a, a group of machine devices may be identified based on the received virtual identifier. Alternatively a single machine device or several machine devices may be identified from an intersection of two or more than two groups of machine devices as described above with respect to Figure 2 and Figure 3.

In a next optional step S10b, a predefined number of machine devices may be selected from the at least one group (G1-LOC-S, G2-LOC-M, G3-HUM, G3-TEM) of machine devices (MD1, ..., MD6) or from the sub-group for providing the data, when a number of machine devices of the at least one group (G1-LOC-S, G2-LOC-M, G3-HUM, G3-TEM) of machine devices (MD1, ..., MD6) or of the sub-group exceeds a predefined threshold. This also allows reducing traffic load between the second network node NN and the machine devices MD1, ..., MD6.

In a further step S11, it is again verified, which operation mode may be applied by the second network node NN or by the distributed system DS. When the second network node NN or the distributed system DS applies the operation mode "2", step S16 may be a next step. When else the second network node NN or the distributed system DS does not apply the operation mode "2", step S12 may be a further step.

Using the step S12, the second network node NN or the distributed system DS transmits the data request DREQ1 or DREQ2 to the single machine device or the several data requests DREQ1, DREQ2 to the group of machine devices or to the several machine devices as identified by the step S10 (see Figure 2 and corresponding description).

In a next step S13, the second network node NN or the distributed system DS receives the data response DRES1 or DRES2 from the single machine device or the several data responses DRES1, DRES2 from the group of machine devices or from the several machine devices as identified by the step S10 (see Figure 2 and corresponding description).

A next optional step after the step S13 may be step S14 when pre-processing is activated at the second network node NN or at the distributed system DS. By the step S14, the second network node NN or the distributed system DS pre-processes the raw data which are received from one or several of the machine devices MD1, ..., MD6 (see Figure 2 and corresponding description).

By the step S16, the second network node NN or the distributed system DS retrieves the raw data or the data from the memory unit which correspond to the received at least one virtual identifier.

A further step after the step S16 or after the step S13 or after the step S14 is step S15. Thereby, the response message RESM is transmitted from the second network node NN or from the distributed system DS to the first network node UT. The response message RESM contains either the raw data when no pre-processing is executed or contains the data which are obtained by pre-processing the raw data as described above with respect to Figure 2.

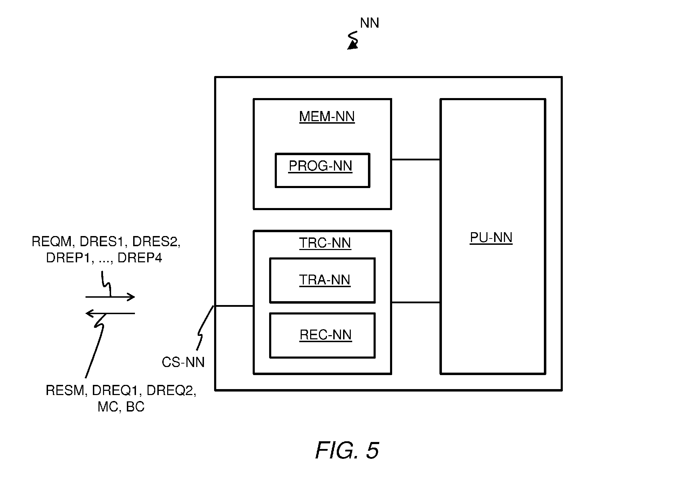

Figure 5 shows schematically a block diagram of the second network node NN for providing the data from the machine devices MD1, ..., MD6 to the first network node UT according to an exemplary embodiment.

The second network node NN contains a connection socket CS-NN for receiving the request message REQM, the data responses DRES1, DRES2 and the data reports DREP1, ..., DREP4 and for transmitting the response message RESM, the data request messages DREQ1, DREQ2, the multicast message MC or the broadcast message BC.

The second network node NN further contains a transceiver module TRC-NN for receiving the request message REQM, the data responses DRES1, DRES2 and the data reports DREP1, ..., DREP4 and for transmitting the response message RESM, the data request messages DREQ1, DREQ2, the multicast message MC or the broadcast message BC. The transceiver module TRC-M contains a transmitter module TRA-NN for transmitting the response message RESM, the data request messages DREQ1, DREQ2, the multicast message MC or the broadcast message BC and a receiver module REC-NN for receiving the request message REQM, the data responses DRES1, DRES2 and the data reports DREP1, ..., DREP4.

The transmitter module TRA-NN may contain typical transmitter components, such as filter or filter circuitry, an amplifier such as a Power Amplifier (PA), conversion circuitry for converting a base band signal to a Radio Frequency (RF) signal, a digital/analogue converter, or signal processing capability such as DSP (DSP = Digital signal processor). The receiver module REC-NN may correspond to one or more receiver devices, one or more receiver units, or any means for receiving. The receiver module REC-NN may therefore comprise typical receiver components, such as filter or filter circuitry, an amplifier such as an LNA (LNA = Low Noise Amplifier), conversion circuitry for converting an RF signal to a base band signal, an analog/digital converter, or signal processing capability such as a DSP.

The second network node NN even further contains a memory module MEM-NN. The memory module MEM-NN is configured to store a computer program PROG-NN for operating a processing module PU-NN. The memory module MEM-NN is further configured to store either the raw data or the data which are obtained by pre-processing the raw data.

The second network node NN even further contains the processing module PU-NN. The processing module PU-NN is configured to operate the second network node NN as the virtual machine device for the at least one group G1-LOC-S, G2-LOC-M, G3-HUM, G3-TEM of machine devices MD1, ..., MD6 and which is further configured to identify the at least one group G1-LOC-S, G2-LOC-M, G3-HUM, G3-TEM of machine devices MD1, ..., MD6 based on the at least one virtual identifier which is received by the request message REQM.

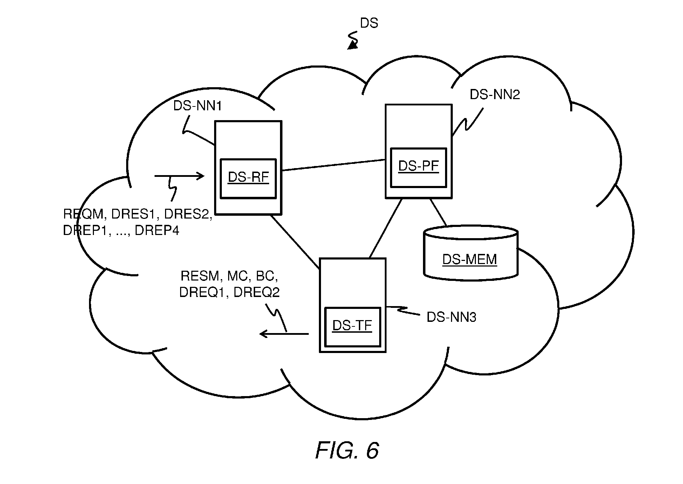

Figure 6 shows schematically a block diagram of the distributed system DS for providing the data from the machine devices MD1, ..., MD6 to the first network node UT according to an exemplarily embodiment.

The distributed system DS contains a first computer or server DS-NN1, a second computer or server DS-NN2 and a third computer or server DS-NN3 which are interconnected. The distributed system DS further contains a fourth computer or server DS-MEM for storing the raw data or the data obtained by pre-processing the raw data. The fourth computer or server DS-MEM is exemplarily connected to the second computer or server DS-NN2.

The first computer or server DS-NN1 contains a receiver functionality DS-RF which is configured to receive the request message REQM, the data responses DRES1, DRES2 and the data reports DREP1, ..., DREP4. The second computer or server DS-NN2 contains a transmitter functionality DS-TF which is configured to transmit the response message RESM, the data request messages DREQ1, DREQ2, the multicast message MC or the broadcast message BC. The third computer or server DS-NN3 contains a processing functionality DS-PF which is configured to operate the distributed system DS as the virtual machine device for at least one group G1-LOC-S, G2-LOC-M, G3-HUM, G3-TEM of machine devices MD1, ..., MD6 and which is further configured to identify the at least one group G1-LOC-S, G2-LOC-M, G3-HUM, G3-TEM of machine devices MD1, ..., MD6 based on the at least one virtual identifier which is received by the request message REQM.

According to further alternative embodiments which are not shown in Figure 6 for simplification one of the computers or servers DS-NN1, DS-NN2, DS-NN3 may contain two of the functionalities DS-RF, DS-TF, DS-PF or the distributed system DS may contain more than three of the computers or servers DS-NN1, DS-NN2, DS-NN3.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for performing a certain function" shall be understood as functional blocks comprising circuitry that is adapted for performing the certain function, respectively. Hence, a "means for something" may as well be understood as a "means being adapted or suited for something". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, DSP hardware, network processor, ASIC, FPGA, read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that the method MET disclosed in the specification or in the claims may be implemented by a device having means for performing each of the respective steps of these methods. Preferably, a computer program product may contain computer-executable instructions for performing the method MET, when the computer program product is executed on a programmable hardware device such as a DSP, an ASIC or an FPGA. Preferably, a digital data storage device may encode a machine-executable program of instructions to perform the method MET.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. A method (MET) for providing data from machine devices (MD1, ..., MD6) to a first network node (UT) comprising:
- configuring (S1) a second network node (NN) of a communication network (RAN) or a distributed system (DS) of said communication network (RAN) to operate as a virtual machine device for at least one group (G1-LOC-S, G2-LOC-M, G3-HUM, G3-TEM) of machine devices (MD1, ..., MD6),
- receiving (S9) a request message (REQM) for said data, wherein said request message (REQM) comprises at least one virtual identifier and wherein said at least one virtual identifier is mapped to said data,
- identifying (S10a) said at least one group (G1-LOC-S, G2-LOC-M, G3-HUM, G3-TEM) of machine devices (MD1, ..., MD6) or an intersection (SUB-G) of said at least one group (G1-LOC-S, G2-LOC-M, G3-HUM, G3-TEM) of machine devices (MD1, ..., MD6) and of at least one further group (G1-LOC-S, G2-LOC-M, G3-HUM, G3-TEM) of machine devices (MD1, ..., MD6) based on said at least one virtual identifier, and
- transmitting (S15) a response message (RESM) comprising said data, wherein said data are provided from said at least one group (G1-LOC-S, G2-LOC-M, G3-HUM, G3-TEM) of machine devices (MD1, ..., MD6) or from said intersection (SUB-G).

2. Method (MET) according to claim 1, wherein said method (MET) further comprises:
- receiving (S6, S13) raw data from said at least one group (G1-LOC-S, G2-LOC-M, G3-HUM, G3-TEM) of machine devices (MD1..., MD6) or from said intersection (SUB-G), and
- pre-processing (S7, S14) said raw data for obtaining said data before said data are transmitted by said response message (RESM).

3. Method (MET-NN) according to claim 2, wherein said pre-processing (S7, S14) is at least one of the following:
- a statistical evaluation of said raw data,
- a context-based evaluation of said raw data.
- a transformation of said raw data.

4. Method (MET) according to any of the previous claims, wherein said method (MET) further comprises mapping (S3) at least one machine device (MD1, ..., MD6) to said at least one group (G1-LOC-S, G2-LOC-M, G3-HUM, G3-TEM) of machine devices (MD1, ..., MD6) when an operating condition is fulfilled or de-mapping (S3) at least one machine device (MD1, ..., MD6) from said at least one group (G1-LOC-S, G2-LOC-M, G3-HUM, G3-TEM) of machine devices (MD1, ..., MD6) when said operating condition is not fulfilled.

5. Method (MET) according to claim 4, wherein said operating condition is either of the following:
- a current battery capacity of said at least one machine device (MD1, ..., MD6) is above a predefined battery capacity,
- a current traffic load of a radio cell providing a wireless connection to said at least one machine device (MD1, MD2, MD3, MD4, MD5, MD6) is below a predefined traffic load,
- an operation mode of said at least one machine device (MD1, ..., MD6) is equal to a full-operational mode.

6. Method (MET) according to any of the preceding claims, wherein said method (MET) further comprises transmitting (S12) at least one data request (DREQ1, DREQ2) for said data to said at least one group (G1-LOC-S, G2-LOC-M, G3-HUM, G3-TEM) of machine devices (MD1, ..., MD6) or to said intersection (SUB-G), and wherein a provisioning of said data from said at least one group (G1-LOC-S, G2-LOC-M, G3-HUM, G3-TEM) of machine devices (MD1, ..., MD6) or from mobile devices of said intersection (SUB-G) is triggered by said at least one data request (DREQ1, DREQ2).

7. Method (MET) according to any of the preceding claims 1 to 5, wherein a provisioning of said data from said at least one group (G1-LOC-S, G2-LOC-M, G3-HUM, G3-TEM) of machine devices (MD1, .., MD6) or from mobile devices of said intersection (SUB-G) is based on periodically receiving (S4) from said at least one group (G1-LOC-S, G2-LOC-M, G3-HUM, G3-TEM) of machine devices (MD1, .., MD6) or from said mobile devices of said intersection (SUB-G) data reports (DREP1) comprising said data, and wherein said method (MET) further comprises storing (S8) said data at said network node (NN) or at said distributed system (DS).

8. Method (MET) according to any of the preceding claims, wherein said method (MET) further comprises selecting (S5a, S10a) from said at least one group (G1-LOC-S, G2-LOC-M, G3-HUM, G3-TEM) of machine devices (MD1..., MD6) or from said intersection (SUB-G) a predefined number of machine devices for providing said data, when a number of machine devices of said at least one group (G1-LOC-S, G2-LOC-M, G3-HUM, G3-TEM) of machine devices (MD1, ..., MD6) or of said intersection (SUB-G) exceeds a predefined threshold.

9. Method (MET) according to any of the preceding claims, wherein said data is either of the following:
- at least one value of a physical parameter of an environment of said at least one group (G1-LOC-S, G2-LOC-M, G3-HUM, G3-TEM) of machine devices (MD1, ..., MD6),
- at least one parameter of a status of infrastructure being monitored by at least one of said machine devices (MD1, ..., MD6).

10. Method (MET) according to any of previous claims, wherein said at least one virtual identifier is either of the following:
- an identifier for a location of said at least one group (G1-LOC-S, G2-LOC-M, G3-HUM, G3-TEM) of machine devices (MD1, ..., MD6),
- an identifier for a functionality of said at least one group (G1-LOC-S, G2-LOC-M, G3-HUM, G3-TEM) of machine devices (MD1, ..., MD6),
- an identifier for an ownership of said at least one group (G1-LOC-S, G2-LOC-M, G3-HUM, G3-TEM) of machine devices (MD1, ..., MD6),
- an identifier for a manufacturing date or for a firmware version for machine devices of said at least one group (G1-LOC-S, G2-LOC-M, G3-HUM, G3-TEM) of machine devices (MD1, ..., MD6),
- an identifier indicating a format of said data being provided.

11. A network node (NN) for providing data from machine devices (MD1, ..., MD6) to a first network node (UT) comprising:
- a receiver module (REC-NN) configured to receive a request message (REQM) for said data, wherein said request message (REQM) comprises at least one virtual identifier and wherein said at least one virtual identifier is mapped to said data,
- a processing module (PU-NN) configured to operate said network node (NN) as a virtual machine device for at least one group (G1-LOC-S, G2-LOC-M, G3-HUM, G3-TEM) of machine devices (MD1, ..., MD6) and to identify said at least one group (G1-LOC-S, G2-LOC-M, G3-HUM, G3-TEM) of machine devices (MD1, ..., MD6) or an intersection (SUB-G) of said at least one group (G1-LOC-S, G2-LOC-M, G3-HUM, G3-TEM) of machine devices (MD1, ..., MD6) and of at least one further group (G1-LOC-S, G2-LOC-M, G3-HUM, G3-TEM) of machine devices (MD1, ..., MD6) based on said at least one virtual identifier, and
- a transmitter module (TRA-NN) configured to transmit a response message (RESM) comprising said data, wherein said data provided from said at least one group (G1-LOC-S, G2-LOC-M, G3-HUM, G3-TEM) of machine devices (MD1..., MD6) of from said intersection (SUB-G).

12. A distributed system (DS) comprising at least two network nodes (DS-NN1, DS-NN2, DS-NN3) for providing data from machine devices (MD1, ..., MD6) to a first network node (UT) comprising:
- a receiver functionality (DS-RF) configured to receive a request message (REQM) for said data, wherein said request message (REQM) comprises at least one virtual identifier and wherein said at least one virtual identifier is mapped to said data,
- a processing functionality (DS-PF) configured to operate said distributed system (DS) as a virtual machine device for at least one group (G1-LOC-S, G2-LOC-M, G3-HUM, G3-TEM) of machine devices (MD1, ..., MD6) and to identify said at least one group (G1-LOC-S, G2-LOC-M, G3-HUM, G3-TEM) of machine devices (MD1, ..., MD6) or an intersection (SUB-G) of said at least one group (G1-LOC-S, G2-LOC-M, G3-HUM, G3-TEM) of machine devices (MD1, ..., MD6) and of at least one further group (G1-LOC-S, G2-LOC-M, G3-HUM, G3-TEM) of machine devices (MD1, ..., MD6) based on said at least one virtual identifier, and
- a transmitter functionality (DS-TF) configured to transmit a response message (RESM) comprising said data, wherein said data provided from said at least one group (G1-LOC-S, G2-LOC-M, G3-HUM, G3-TEM) of machine devices (MD1, ..., MD6) or from said intersection (SUB-G), and wherein at least one of said receiver functionality (DS-RF), said processing functionality (DS-PF) and said transmitter functionality (DS-TF) are distributed across said at least two network nodes (DS-NN1, DS-NN2, DS-NN3).

13. A communication network (RAN) for providing data from machine devices (MD1, ..., MD6) to a first network node (UT), wherein said communication network (RAN) comprises at least one group (G1-LOC-S, G2-LOC-M, G3-HUM, G3-TEM) of machine devices (MD2, MD3, MD4, MD5, MD6) and a network node (NN) according to claim 11 or a distributed system (DS) according to claim 12.

14. Communication network (RAN) according to claim 13, wherein said communication network (RAN) is a mobile radio communication network.
